Europäisches Patentamt

European Patent Office

Office européen des brevets

(19)

(11) Numéro de publication: **0 057 029**
**A1**

(12) **DEMANDE DE BREVET EUROPEEN**

(21) Numéro de dépôt: **82200037.8**

(22) Date de dépôt: **14.01.82**

(51) Int. Cl.³: **C 22 B 4/00**
**C 10 G 1/06**

(30) Priorité: **21.01.81 EP 81870008**
**29.04.81 BE 204645**
**06.05.81 BE 204707**

(43) Date de publication de la demande:
**04.08.82 Bulletin 82/31**

(84) Etats contractants désignés:
**AT BE CH DE FR GB IT LI LU NL SE**

(71) Demandeur: **ATELIERS DE CONSTRUCTIONS
ELECTRIQUES DE CHARLEROI (ACEC) Société Anonyme
54, Chaussée de Charleroi
B-1060 Bruxelles(BE)**

(72) Inventeur: **Bingen, Roald
41, Avenue des Genêts
B-6001 Marcinelle(BE)**

(72) Inventeur: **Becko, Yves
203, Boulevard Tirou
B-6000 Charleroi(BE)**

(74) Mandataire: **Bossard, Franz et al,
ACEC - Service des Brevets Boîte Postale 4
B-6000 Charleroi(BE)**

(54) **Procédé de traitement de matières pulvérulentes a haute température et installation pour le réaliser.**

(57) Dans un procédé dans lequel des matières pulvérulentes sont injectées dans une chambre de mélange (14) via un dispositif d'alimentation et transportées dans une chambre de réaction (1) coopérant avec une torche à plasma (16) et dans lequel les produits de la réaction sont envoyés dans un dispositif de séparation (2) séparant les produits solides des produits gazeux et ensuite dans un ou plusieurs dispositifs (6, 37) de condensation et/ou d'élimination de composants gazeux, on maintient une pression élevée dans un espace composé de la torche à plasma (16), la chambre de réaction (1) et le dispositif de séparation (2).

Fig. 4

EP 0 057 029 A1

## PROCEDE DE TRAITEMENT DE MATIERES PULVERULENTES A HAUTE TEMPERATURE ET INSTALLATION POUR LE REALISER..

Il existe déjà des installations de traitement de matière pulvérulente comprenant une torche à plasma, c'est-à-dire un dispositif assurant l'échauffement d'un fluide par transfert de calories à partir d'un arc électrique brûlant dans un gaz de réaction qui y est injecté. Dans ces installations connues, une chambre de réaction qui peut être l'espace où brûle l'arc électrique ou une chambre en aval de cet espace, se trouve sensiblement à la pression de l'atmosphère ambiante.

Le but de l'invention est un procédé de traitement similaire, mais sous pression élevée du gaz de réaction, ainsi que l'application de ce procédé à l'hydrogénopyrolyse, par exemple du charbon. Un autre but est une installation de conception particulièrement avantageuse, permettant de réaliser ce procédé.

Suivant l'invention, un procédé dans lequel des matières pulvérulentes sont injectées dans une chambre de mélange via un dispositif d'alimentation et transportées dans une chambre de réaction coopérant avec une torche à plasma, et dans lequel les produits de la réaction sont envoyés dans un dispositif de séparation séparant les produits solides des produits gazeux et ensuite dans un ou plusieurs dispositifs de condensation et/ou d'élimination de composants gazeux est caractérisé en ce qu'on maintient une pression élevée dans un espace composé de la torche à plasma, la chambre de réaction et le dispositif de séparation.

En ce qui concerne l'application de ce procédé à l'hydrogénopyrolyse du charbon, de schistes bitumineux, de lignite etc, des économies notables sont possibles. Dans un premier stade de l'hydrogénopyrolyse, les matières volatiles contenues dans la matière pulvérulente, sont transformées en produits liquides (benzène par exemple); d'autre part, le carbone de la matière pulvérulente injectée dans un réacteur alimenté en hydrogène est gazéifié partiellement en un gaz à haut pouvoir calorifique (le méthane par exemple).

Une installation permettant de réaliser l'hydrogénopyrolyse est notamment décrite dans:

R. CYPRES
"Hydrogénopyrolyse préalable du charbon brûlé dans les centrales électriques"

Fifth International Conférence on Coal Research, September 1-5th, 1980, Düsseldorf, vol.II

39.21/1872.

R. CYPRES & S. FURFARI
"Pyrolyse de charbon à basse température sous pression d'hydrogène" Communication présentée à la Table Ronde "Valorisation Chimique
et physique du Charbon", C.E.E., Bruxelles, 24-25 novembre 1980.

Il est aussi connu que l'intérêt économique d'un semblable procédé est fortement limité par l'importance des investissements et des technologies à mettre en oeuvre pour la production de l'hydrogène nécessaire car la teneur en hydrogène des combustibles carbonés traités est trop faible pour satisfaire les besoins du procédé et un apport d'hydrogène est toujours nécessaire.

Pour réaliser l'hydrogénopyrolyse de matières pulvérulentes, à haute teneur de carbone ou autres, le procédé suivant la présente invention ne nécessite pas d'unité complémentaire de production d'hydrogène (comme c'était le cas précédemment); il est au contraire caractérisé en ce qu'on recycle partiellement ou totalement les gaz produits lors de l'hydrogénopyrolyse, et en ce qu'on enrichit à haute température ces gaz en hydrogène en faisant appel à des réactions de craquage et de décomposition qui dans le cas d'hydrocarbures sont par exemple:

$$CH_4 \qquad\qquad C + 2H_2$$
$$CH_4 + H_2O \qquad\qquad CO + 3\ H_2$$
$$CH_4 + 2H_2O \qquad\qquad CO_2 + 4\ H_2$$
$$C_2H_6 \qquad\qquad 2\ C + 3\ H_2$$
$$C_2H_6 + 2H_2O \qquad\qquad 2CO + 5\ H_2$$
$$CH_4 + CO_2 \qquad\qquad 2CO + 2\ H_2$$
$$CH_4 + \tfrac{1}{2}\ O_2 \qquad\qquad CO + 2\ H_2$$

Ces gaz recyclés enrichis en hydrogène sont réinjectés dans la chambre de réaction dans laquelle s'effectue l'hydrogénopyrolyse.

L'invention est décrite ci-dessous par rapport à plusieurs exemples de formes d'exécution dans des installations représentées schématiquement sur les figures 1 à 4 et 7 et 8 du dessin annexé. Les figures 5 et 6 sont des coupes de détails des figures 7 et 8.

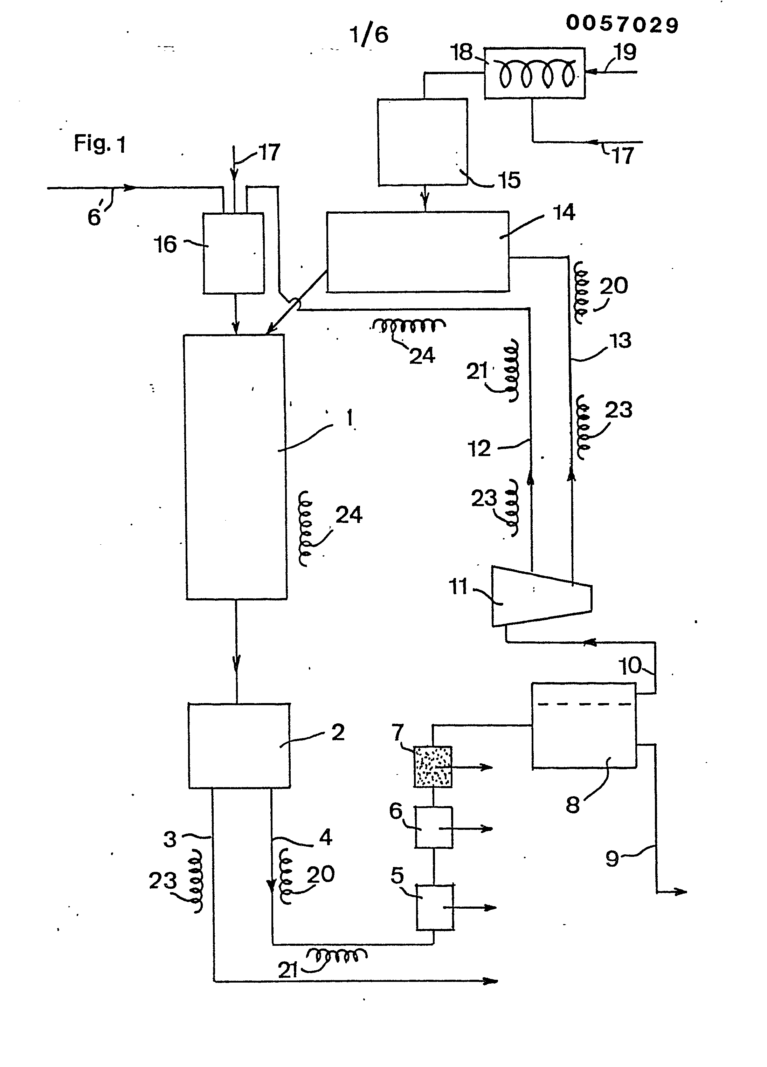

A la figure 1, une chambre de réaction 1 est réalisée, en l'occurrence sous la forme connue d'un lit fluidisé, lit entraîné ou lit mixte (sputting bed) et alimentée d'une part en matière pulvérulente et d'autre part sous haute pression (5 à 500 bars), en gaz chauds (leur température étant supérieure à 500°C). A la sortie de la chambre de réaction 1, un cyclone 2 ou tout autre moyen de séparation approprié extrait les résidus solides à haute teneur en carbone via un conduit 3, et via un autre conduit 4, les produits gazeux résultant de l'hydrogénopyrolyse. Le conduit 4 fait passer ces gaz successivement dans un condenseur 5 qui sépare par condensation les hydrocarbures lourds des hydrocarbures plus légers tels que le benzène et les phénols, ensuite dans un condenseur 6 qui condense la vapeur d'eau et ensuite éventuellement dans une unité 7 de fixation d'anhydride d'acide carbonique, des produits sulfurés ou d'autres produits gazeux qu'on désire éliminer des gaz de sortie que l'on recycle au moins en partie.

Avant de les recomprimer, il peut être avantageux de faire passer les gaz à recycler, composés notamment d'hydrocarbures légers (méthane principalement), d'oxyde de carbone et d'hydrogène, dans un dispositif 8 (tel par exemple qu'un séparateur à diffusion gazeuse permettant d'enrichir le gaz de recyclage en hydrogène et d'évacuer le gaz appauvri d'hydrogène par un conduit de sortie 9. Il est évident que le débit du conduit 9 sortant de l'installation varie en fonction de la teneur en matières volatiles du charbon injecté.

Les gaz de recyclage, éventuellement enrichis en hydrogène à l'aide du dispositif 8 sont envoyés via un conduit 10 pour être comprimés par un compresseur 11. A la sortie de ce compresseur 11, en vue d'assurer sa circulation, le gaz de recyclage est réparti au moyen d'une vanne de répartition, non représentée, entre une conduite 12 et une conduite 13. La partie du gaz recyclé via la conduite 13 alimente une chambre de mélange 14. Dans la chambre de mélange 14, du charbon pulvérulent préchauffé dans un rechauffeur d'entrée 15 est mélangé intimement aux gaz de réaction à haute pression et haute température. Les gaz de réaction doivent avoir une teneur significative en hydrogène.

Le gaz de recyclage quittant le compresseur par la conduite 12 est injecté dans une unité de chauffage 16 où a lieu un craquage. Cette unité 16 peut être, dans une première variante, une torche à plasma dans laquelle l'énergie fournie par un arc électrique dissocie le méthane en carbone et hydrogène.

Vu le caractère parfois peu réactif de ce carbone, il peut s'avérer intéressant de recycler, via un conduit 6' une partie de l'eau récoltée dans le condenseur 6, vers la torche à plasma pour obtenir de l'oxyde de carbone CO ($CH_4 + H_2O$   $CO + 3H_2$) et augmenter en même temps la production d'hydrogène. Cette même injection d'eau peut, en fonction des conditions de travail (température, pression), transformer tout ou partie du CO en $CO_2$ avec, également production d'hydrogène.

Les gaz quittant l'unité de chauffage 16 d'une part et le mélange gaz plus matière pulvérulente quittant la chambre de mélange 14 d'autre part alimentent le lit fluidisé dans la chambre de réaction 1.

On peut, par un conduit d'injection 17, ajouter dans l'unité de chauffage 16 des hydrocarbures de peu de valeur comme des goudrons, des résidus de la distillation du pétrole, des huiles usées, qu'il s'agisse d'injection sous forme liquide, solide ou gazeuse.

Un conduit d'injection 17' peut introduire de tels hydrocarbures de peu de valeur aussi dans un broyeur 18 alimenté en charbon par un conduit d'amenée 19. La sortie de ce broyeur 18 alimente le réchauffeur d'entrée 15 en matière pulvérulente.

Une autre variante d'une unité productrice d'hydrogène peut être un dispositif de stockage continu ou discontinu de la chaleur, semblable à un COWPER, non représenté, dans lequel une partie des gaz de sortie est brûlée pour chauffer le solde de gaz recyclé à une température suffisante pour réaliser les réactions décrites ci-avant.

Enfin, il peut s'avérer intéressant de combiner ces deux variantes, la torche à plasma étant alimentée par tout ou partie des gaz préchauffés grâce au COWPER et ne faisant office que de réacteur chimique grâce à l'ionisation produite par l'arc électrique. Dans ce cas, la consommation de l'énergie électrique peut être ajustée par un choix judicieux de la chaleur de combustion dans le COWPER.

Il doit être clairement compris que le procédé de recyclage des gaz produits pour régénérer l'hydrogène nécessaire à l'hydrogénopyrolyse du charbon telle que décrit ici s'applique à d'autres combustibles carbonés tels que, outre le charbon, le lignite, les schistes bitumineux, les terres de terrils, etc....

Il est certain que le recyclage de tout ou partie des gaz produits par l'hydrogénopyrolyse permet de minimiser la consommation spécifique d'énergie d'un semblable procédé; en effet, le processus ayant lieu pour des températures entre 500 et 1000°C, il est possible de préchauffer les gaz pendant le recyclage à travers des échangeurs schématiquement représentés suivant les interfaces gaz/gaz 20,21, gaz/solides 23 et gaz/chambre de réaction 24.

De plus, il est possible de regrouper l'ensemble des dispositifs et tuyauteries associés à la recirculation de gaz dans une enceinte non représentée à la figure 1, soumise à une pression interne égale à la pression moyenne des gaz de recirculation, facteur qui facilite grandement le dimensionnement de ces tuyauteries.

De même, il peut être avantageux de broyer le charbon ou tout autre combustible carboné décrit précédemment dans le broyeur 18 en injectant des hydrocarbures liquides de peu de valeur pour empêcher l'oxydation de la matière pulvérulente. Une telle oxydation pourrait être nuisible au bon fonctionnement du procédé et à la production d'hydrocarbure gazeux. En lieu et place des hydrocarbures liquides il est possible aussi d'injecter de l'eau.

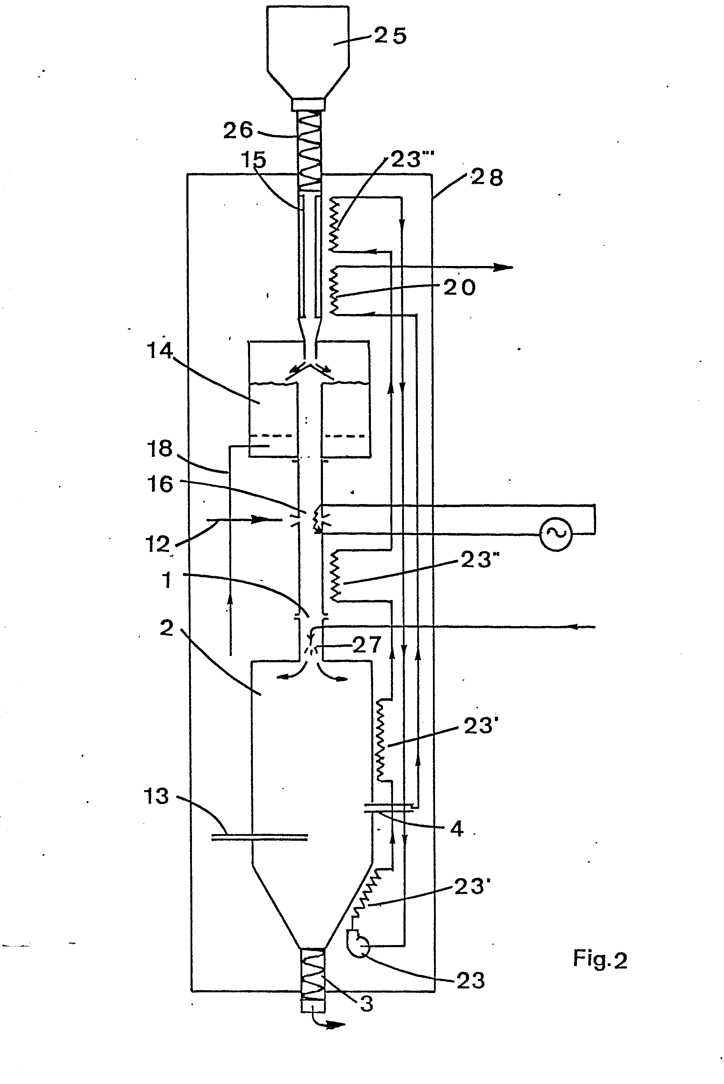

Suivant un autre exemple de l'invention représenté à la figure 2, une colonne alimentaire constituée par un silo 25 pour de la matière pulvérulente par exemple un minerai à base d'oxyde métallique et une hélice alimentaire 26 se termine par un réchauffeur d'entrée 15 pour le préchauffage de la matière pulvérulente. Dans le silo 25 et l'hélice alimentaire 26, la matière pulvérulente est compacte et agit comme un bouchon d'un espace sous pression composé notamment par la chambre d'une torche à plasma 16, la chambre de réaction 1, si cette chambre ne se confond pas avec la torche à plasma, et enfin l'enceinte d'un dispositif de séparation 2, en l'occurrence un cyclone dans lequel on maintient une pression de par exemple 16 à 22 bars d'un gaz de réaction. En lieu et place du réchauffeur d'entrée 15, ou en complément, le préchauffage de la matière pulvérulente peut avoir lieu dans une chambre de mélange et d'homogénéisation 14, en l'occurrence dans un lit fluidisé dans lequel tombe la matière pulvérulente et dans lequel du gaz de réaction par exemple de l'hydrogène est injecté à température élevée, et sous une pression de par exemple 20 à 40 bars par l'intermédiaire d'une tuyauterie 18. On réussit ainsi à produire un milieu d'homogénéisation des matières pulvérulentes dans le gaz de réaction. Ce gaz peut provenir d'une installation de production, non représentée, ou peut être, de préférence, un des composants principaux du gaz de recyclage en provenance du cyclone de séparation 2 à l'extrémité aval de l'espace de traitement 1.

Du lit fluidisé 14, disposé en aval de la colonne alimentaire et en amont de la torche à plasma 16, la matière pulvérulente en suspension est véhiculée à travers l'arc électrique de la chambre de la torche à plasma 16. Là elle est échauffée par l'arc qui brûle dans cette chambre et, dans le cas de réactions exothermiques, par la chaleur libérée à cette occasion. Dans le cas de réactions endothermiques, le préchauffage dans le réchauffeur 15 de la colonne alimentaire ou dans le lit fluidisé 14 doit être plus important. Si la réactivité des composants dans la chambre de réaction 1 en aval de la torche à plasma doit être freinée, une douche froide 27, par exemple à eau ou à gaz, appropriée peut être prévue dans cette même chambre 1. Il est à remarquer que dans cet exemple selon la figure 2, les gaz sortant de la chambre d'homogénéisation 14 alimentent la torche à plasma 16 dont les gaz de sortie traversent la chambre de réaction aval 1. L'utilisation d'un cyclone 2 comme dispositif pour séparer les composants formés dans la chambre de réaction 1 est particulièrement avantageuse, car il est possible ainsi d'obtenir cette séparation dans les conditions de pression et de température régnant dans l'espace sous pression.

Le cyclone 2 présente des sorties pour les composants qu'il permet de séparer. 3 représente un dispositif formant bouchon destiné à l'extraction des matières solides pulvérulentes telles que les poudres métalliques issues des réactions et séparées des matières gazeuses par le dispositif de séparation 2. 13 est une sortie des gaz légers par exemple de l'hydrogène. 4 est une sortie pour des gaz lourds par exemple, vapeur d'eau, oxydes de carbone, et les autres produits de décomposition, si le minerai traité comprend en outre par exemple des carbonates, phosphates, sulfures ou sulfates etc. Après passage dans un ou plusieurs étages d'un compresseur, non représenté, l'hydrogène mélangé éventuellement à une proportion mineure d'autres gaz légers extrait par la sortie 4 peut être recyclé et envoyé dans la tuyauterie 8 alimentant le lit fluidisé 14 et/ou dans une tuyauterie 12 pour être injecté dans la chambre de réaction 1 ou la torche à plasma 16.

La chaleur emmagasinée dans les composants dans l'espace sous pression, composé de la chambre d'homogénéisation 14, la chambre de la torche à plasma 16, la chambre de réaction 1 et l'enceinte du dispositif de séparation 2 peut être récupérée de diverses manières. La chaleur emmagasinée dans les gaz légers qui. forment le gaz de recyclage réinjecté soit dans la chambre de la torche à plasma 16 soit dans la chambre de réaction 1, soit dans le lit fluidisé 14 est utilisée directement et ne doit subir aucun transfert à travers d'échangeurs. La chaleur emmagasinée dans des gaz lourds qui sont récoltés par la sortie 4 peut être utilisée grâce à un échangeur 20 disposé par exemple dans le réchauffeur d'entrée 15. La chaleur emmagasinée dans les matières solides pulvérulentes qui coulent le long des parois de l'enceinte du cyclone 2 peut être récupérée par refroidissement des parois de cette enceinte au moyen d'échangeurs tels que 23' qui peuvent être mis en série avec un échangeur 23" à la sortie de la chambre de réaction de la torche à plasma 16 et un échangeur 23"' par exemple à l'endroit du réchauffeur d'entrée 15 qui permet de préchauffer la matière pulvérulente fournie à l'entrée. Le fluide transportant la chaleur par les échangeurs 23' et 23"' peut être maintenu en circulation soit par thermosiphon, soit par une pompe 23.

Pour faciliter le maintien sous pression de l'espace composé de la chambre d'homogénéisation ,14, la chambre de la torche à plasma 16, la chambre de réaction 1 et l'enceinte du dispositif séparateur 2, il peut être avantageux d'entourer les éléments définissant cet espace par une enceinte 28 à l'intérieur de laquelle on maintient une pression du gaz de réaction ou d'un gaz de préférence inerte tel que l'argon ou l'azote, voisine d'une des pressions dans cet espace sous pression.

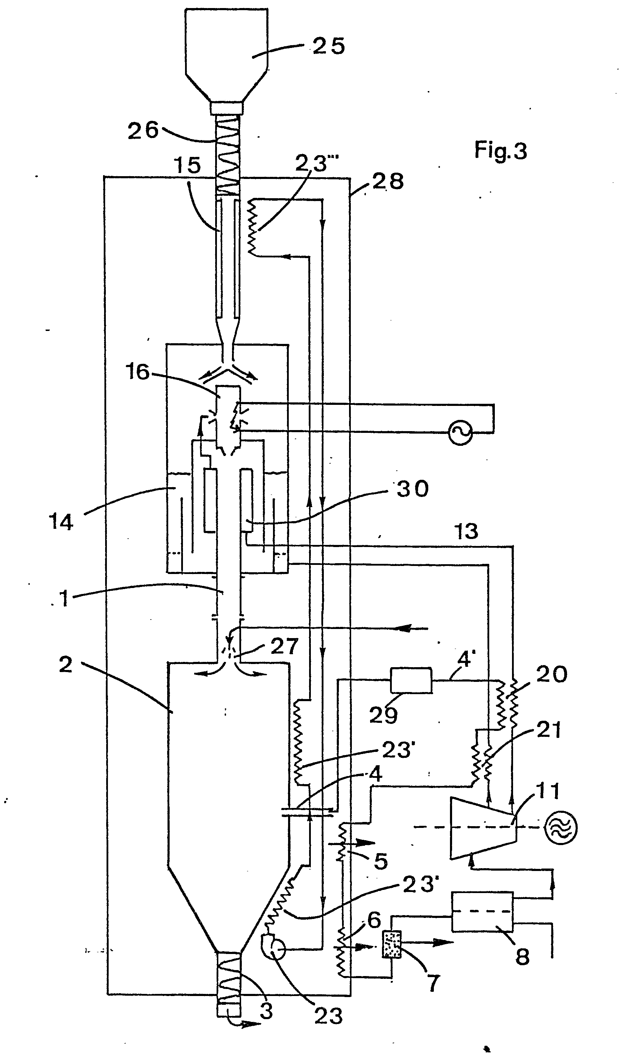

L'installation montrée à la figure 3 comprend également une colonne alimentaire 15, agissant comme bouchon de l'espace composé de la chambre d'homogénéisation formé par un lit fluidisé 14 d'une torche à plasma 16 et d'une chambre de réaction 1 à la sortie de la torche à plasma 16. Dans cette chambre de réaction 1 débouche non seulement la torche à plasma 16, mais, en parallèle, aussi la sortie du lit fluidisé 14. Il est à remarquer que dans cet exemple suivant la figure 3, comme d'ailleurs dans l'exemple suivant la figure 1, la matière pulvérulente ne traverse pas la torche à plasma 16, mais seulement la chambre de réaction 1. Des moyens sont prévus, à l'entrée de la chambre 1, pour assurer un mélange intime des gaz de sortie de la torche à plasma 16 et du fluide sortant de la chambre d'homogénéisation, c'est-à-dire du lit fluidisé 14.

Le dispositif de séparation qui fait suite à la chambre de réaction 1 est constitué d'un cyclone 2 qui permet de séparer les matières solides pulvérulentes, en l'occurrence les poudres métalliques formées dans la chambre de réaction, des composants gazeux. Les matières solides sont évacuées par la sortie 3 qui forme bouchon grâce à la quantité de matières solides pulvérulentes qui s'y accumulent. Les composants gazeux, en l'occurrence l'hydrogène, la vapeur d'eau, les oxydes de carbone, etc.

sont extraits via une sortie 4, un filtre 29 et une canalisation 4' refroidie par des échangeurs 20 et 21. Ces derniers permettent d'abaisser le tampérature des composants gazeux à une valeur suffisante pour que les composants gazeux qui deviennent liquides à plus basse température, telle la vapeur d'eau, se condensent dans des condenseurs 5, 6 appropriés. L'anhydride d'acide carbonique ainsi que le soufre, par exemple sous forme de $H_2S$, peuvent être extraits dans une colonne d'absorption 7, par exemple à la chaux, tandis que le monoxyde de carbone et l'hydrogène sont recyclés après passage par un compresseur 11 et réchauffage d'une part dans l'échangeur 21 et d'autre part dans des échangeurs 21 et 30 pour être injectés respectivement dans la chambre 14 et dans la torche à plasma 16. Dans le but d'obtenir une pression partielle d'hydrogène plus élevée dans le gaz de recyclage, il est possible de prévoir un séparateur à diffusion 8 à l'entrée du compresseur 11 dans lequel le gaz de recyclage peut être enrichi en gaz de réaction.

Le gaz de recyclage, riche en hydrogène, est envoyé dans la torche à plasma 16 où il s'échauffe et où d'éventuels hydrocarbures peuvent être décomposés partielllement en carbone et hydrogène, ce qui produit un enrichissement supplémentaire en gaz de réaction. Quelque soit le gaz de réaction, un séparateur à diffusion 8 ou un ensemble de séparateurs à diffusion permettent d'éliminer en grande partie des gaz d'un autres poids moléculaire que celui du gaz de réaction.

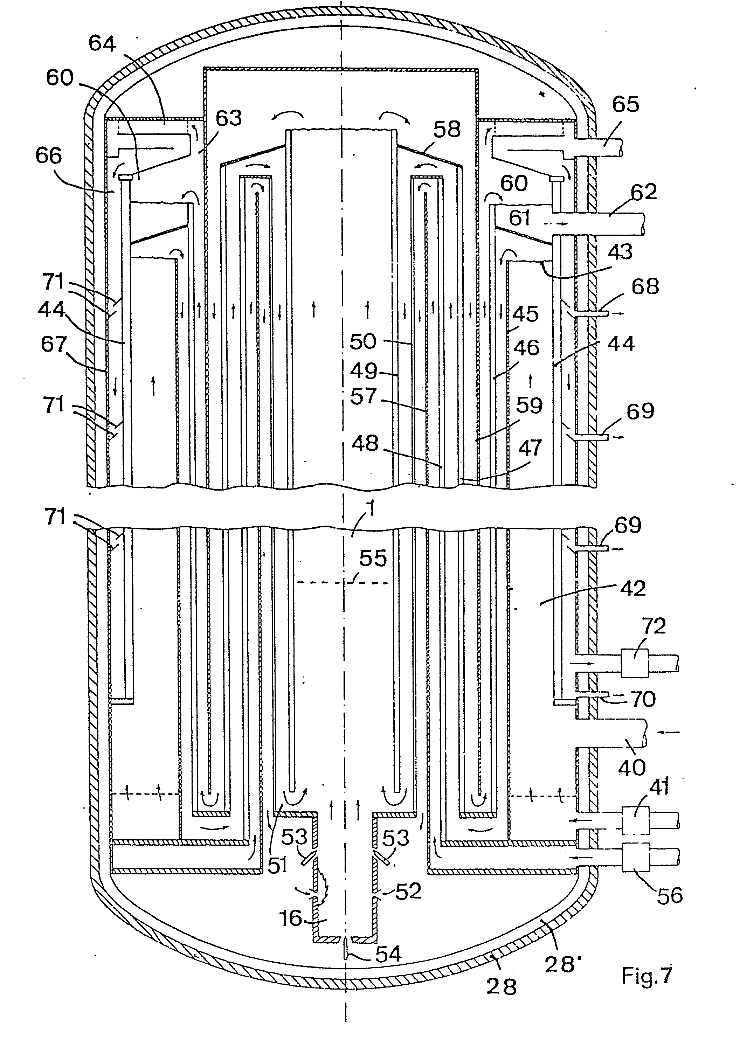

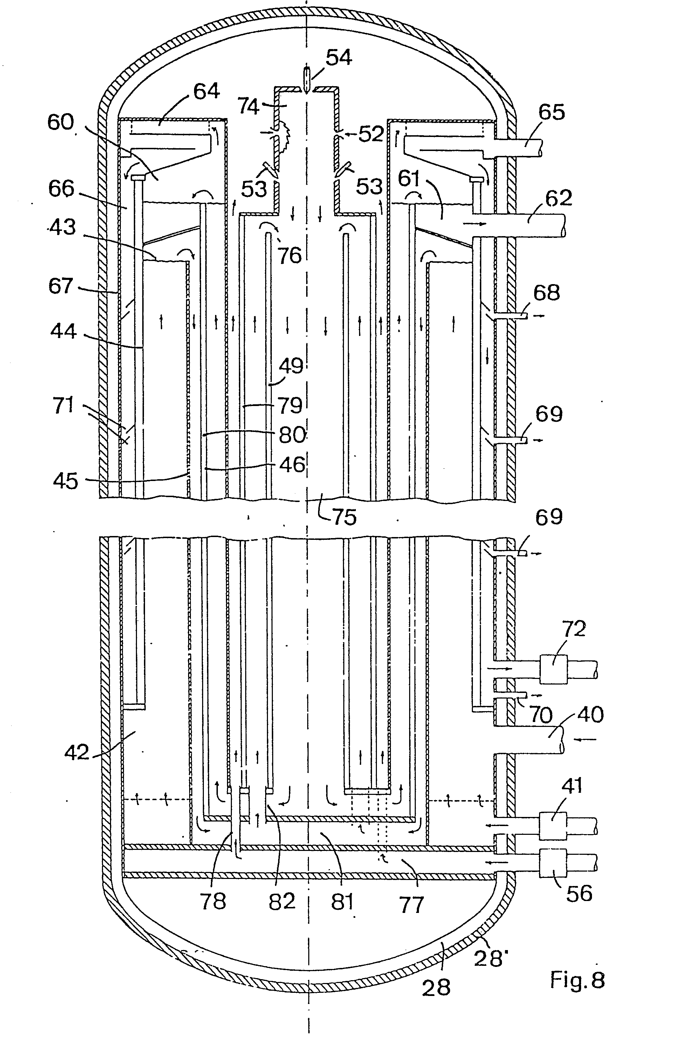

Une autre installation de traitement à haute température de matières pulvérulentes pour exécuter des procédés de traitement chimique et/ou physique de matières pulvérulentes en suspension dans une chambre à atmosphère de gaz inertes ou réactifs est représentée aux figures 7 et 8. Dans ces procédés on utilise comme source de chaleur une torche à plasma, dans laquelle l'arc jaillissant entre deux électrodes communique aux gaz qui le traverse une énergie contrôlable portant ces derniers à haute température. Comme il arrive fréquemment que les gaz doivent être présents en une quantité beaucoup plus grande que la quantité strictement absorbée par le procédé chimique et/ou physique, il y a intérêt à recycler la partie surabondante des gaz non utilisés dans la chambre de réaction.

Il peut se faire d'autre part que les produits gazeux, liquides ou solides que l'on veut extraire à l'issue du traitement ne puissent être séparés ou extraits des autres gaz de réaction qu'à une température sensiblement plus basse que la température de réaction. Dans ce cas, les gaz recyclés doivent être successivement refroidis puis réchauffés au cours d'un cycle de parcours. Ce problème est surtout aigu si l'on utilise comme moyen de chauffage une torche à plasma, dont il est connu qu'elle travaille de façon d'autant plus économique que les gaz à son entrée sont plus chauds. . La solution suivant les figures 7 et 8 est remarquable par l'emploi d'échangeurs thermiques particulièrement adaptés permettant de récupérer les calories des gaz de sortie et les renvoyer dans les gaz d'entrée, diminuant d'autant la puissance de chauffe à fournir par la torche à plasma.

Les chambres de mélange et de réaction de l'installation ainsi que les différents échangeurs possèdent une forme telle que les déperditions calorifiques vers l'extérieur de l'enceinte du réacteur soient rendues minimales et que le tout constitue un ensemble agencé de façon favorable tant au point devue mécanique que thermique.

Une disposition adéquate des différents éléments permet de coupler l'action de la torche à plasma, de la chambre de réaction et de l'échangeur thermique le plus proche de la chambre de réaction, de façon à obtenir l'un des résultats suivants:

a) chambre de réaction contenant un lit fluidisé de température relativement homogène,

b) Chambre de réaction contenant un lit fluidisé de température décroissante en aval de la torche à plasma, avec récupération des calories,

c) chambre de réaction contenant un lit entraîné avec une température fortement décroissante en aval de la torche à plasma, avec récupération des calories.

Les chaleurs de vaporisation des composants liquides à température normale et gazeux à haute température sont récupérées pour diminuer d'autant la puissance que doit fournir la torche à plasma.

De plus les traitements chimiques et/ou physiques peuvent avoir lieu non seulement à haute température mais également à moyenne ou haute pression, c'est-à-dire de 2 à 200 bars, dans lequel cas il est d'une part prévu de réduire l'énergie de compression des gaz par une disposition des échangeurs limitant les pertes de charge , et d'autre part d'assurer une rigidité mécanique et une isolation thermique par l'utilisation pourl'enceinte extérieure du réacteur de trois parois réalisant respectivement l'étanchéité, l'isolation thermique et la rigidité mécanique du réacteur.

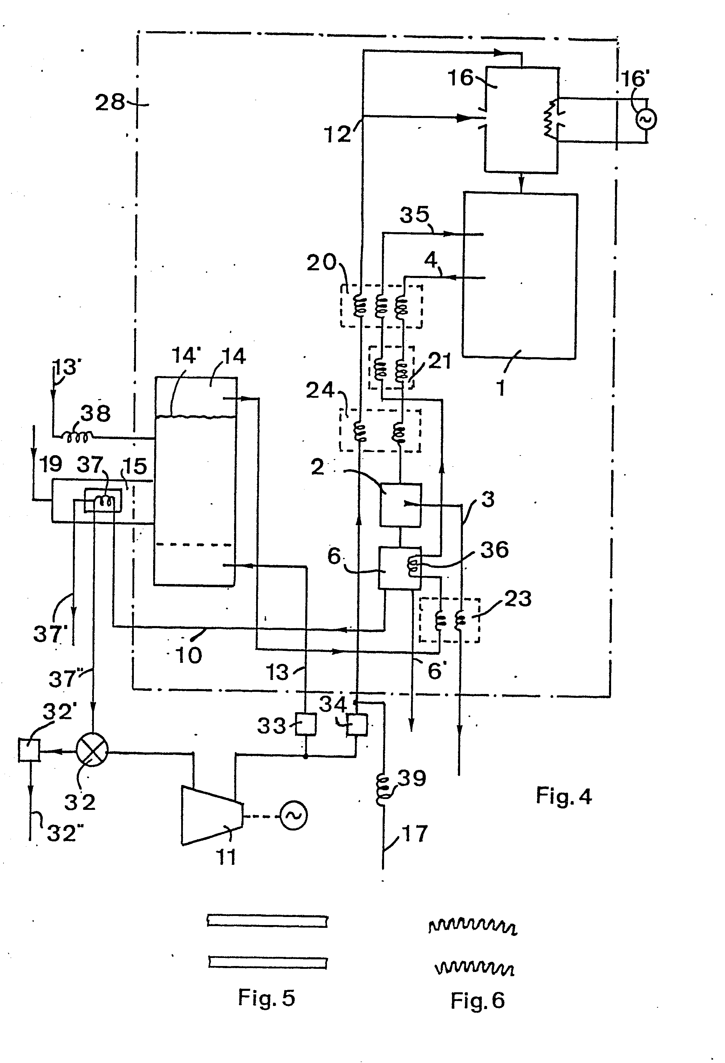

Les installations décrites aux figures 4, 7 et 8 peuvent notamment être utlisées pour la réduction d'oxydes métalliques, dans quel cas les gaz réactifs sont constitués de gaz réducteurs tels que l'hydrogène, l'oxyde de carbone, le méthane, etc. tandis que la matière pulvérulente est constituée de l'oxyde métallique, broyée en fines particules.

Elles peuvent aussi être utlisées pour la fabrication de ciment, dans quel cas les gaz sont constitués d'air chaud ou de gaz inertes tels que l'azote, tandis que la matière pulvérulente est constituée d'un mélange des différents composants solides qui interviennent dans la constitution du clinker, tels que le calcaire et l'argile préalablement broyés et homogénéisés.

Elles peuvent enfin être utlisées pour l'hydrogénopyrolyse de matières à forte teneur en carbone telle que le charbon, les schistes bitumineux, les goudrons et les résidus lourds de la distillation du charbon, le lignite.

Les exemples de réalisation suivants sont décrits dans l'hypothèse d'une installation d'hydrogénopyrolyse du charbon, étant entendu que cette description s'applique également à tous les autres cas de traitement de matières pulvérulentes en milieu gazeux à haute température, chauffé par torche à plasma.

La figure 4 représente un schéma de principe qui montre la façon dont des échangeurs peuvent être disposés de façon à assurer un fonctionnement énergétique optimal d'une installation d'hydrogénopyrolyse du charbon.

La matière pulvérulente, en l'occurrence du charbon pulvérisé, est introduite à l'aide d'un dispositif d'alimentation 15 dans une enceinte 28 d'un réacteur où règne une pression de 2 à 200 bars, par exemple 20 bars.

Dans l'enceinte du réacteur 28 sont disposés les éléments suivants:

a) une chambre de mélange 14 qui assure la suspension de la matière pulvérulente dans une première partie des gaz, qui sont dans l'exemple un mélange en proportions variables de $H_2$, CO, $H_2O$, $CO_2$, $CH_4$, $C_2H_6$ et gaz analogues; cette suspension peut avantageusement être réalisée par la technique des lits fluidisés, dans laquelle les gaz sont introduits dans la partie inférieure et les matières pulvérulentes dans la partie centrale, celles-ci atteignant un niveau 14' dans la chambre de mélange 14.

b) une torche à plasma 16 alimentée en énergie électrique à partir d'un réseau 16', et chauffant à l'aide d'un arc les gaz qui la traversent; ces gaz sont dans l'exemple de la même nature (mais en proportion éventuellement différente) que ceux contenus dans la chambre de mélange.

c) une chambre de réaction 1 dans laquelle aboutissent d'une part des gaz provenant de la chambre de mélange 14 et d'autre part des gaz provenant de la torche à plasma 16, la sortie étant un conduit 4.

d) un dispositif de recyclage partiel ou total des gaz de sortie, comprenant un distributeur 32 réglant la proportion du débit gazeux acheminé vers la sortie des gaz, un compresseur 11 assurant la circulation des gaz recyclés à travers l'installation, une vanne 33 réglant le débit des gaz recyclés via un conduit 13 vers la chambre de mélange 14 ainsi qu'une vanne 34 réglant le débit des gaz recyclés via un conduit 12 vers la torche à plasma 16.

e) un échangeur 20 récupérant les calories du gaz de sortie dans un conduit 4 à la température la plus élevée du cycle gazeux et les transférant dans les gaz de sortie de la chambre de mélange 14 véhiculés dans un conduit 35 ainsi que dans les gaz d'alimentation de la torche à plasma traversant le conduit 12.

f) un échangeur 24 transférant la chaleur des gaz de sortie de la chambre de réaction 1 dans le conduit 4 vers les gaz de sortie de la chambre de mélange 14 véhciulés dans le conduit 12.

g) un échangeur 21 transférant la chaleur des gaz de sortie de la chambre de réaction 1 dans le conduit 4 vers les gaz d'alimentation de la torche à plasma 16 dans le conduit 35.

h) un échangeur 36 raccordé au conduit 35 pour extraire la chaleur d'un conduit 6' sortant d'un condenseur ou ensemble de condenseurs 6 relié à un dispositif de séparation 2, alimenté par le conduit 4.

i) un échangeur 23 transférant la chaleur des solides extraits par un conduit 3 d'un dispositif de séparation de solides 2 vers les gaz de sortie de la chambre de mélange 14 dans le conduit 35.

Les gaz de recyclage quittant le condenseur 6 via un conduit 10 sont amenés dans le distributeur 32. Toutefois, si ces gaz comprennent par exemple encore de la vapeur d'eau, un condenseur 37 de la vapeur d'eau peut être disposé à l'endroit même du dispositif d'alimentation de matières pulvérulentes 15. Le condenseur 37 est muni d'une conduite d'extraction d'eau 37' et d'une conduite 37" qui amène les gaz non condensés dans le distributeur 32 qui permet soit l'extraction via une vanne 32' et un conduit 32", soit le recyclage via le compresseur 11. La vanne 32' détermine le niveau de pression à l'intérieur de l'installation, tandis que le compresseur fournit la pression nécessaire à la circulation des gaz à l'intérieur de l'installation.

Une injection complémentaire de gaz de réaction peut être prévu, par exemple au moyen d'un conduit 13'. Un préchauffage de cet apport de gaz peut avoir lieu dans un échangeur 38 récupérant une chaleur perdue au moyen d'un dispositif non représenté. Un autre apport complémentaire d'un fluide à décomposer dans la torche à plasma 16 peut être injectée via une conduite 17 dans le conduit 12. Ici aussi, il est possible de préchauffer cet apport de fluide dans un échangeur 39 récupérant une chaleur perdue au moyen d'un dispositif non représenté.

La figure 7 représente un exemple d'une forme d'exécution dans laquelle les éléments constitutifs d'une installation telle que décrite ci-avant dans son principe s'intègrent de manière avantageuse dans une structure compacte. Dans l'installation de traitement à haute température de matières pulvérulentes en suspension dans un milieu gazeux selon la figure 7, une torche à plasma 16 est disposée en dessous d'une chambre de réaction 1 qui contient les produits traités sous forme de lit fluidisé. La torche à plasma 16 et la chambre de réaction 1 sont de forme cylindrique et disposées dans l'axe d'une enceinte cylindrique constituée d'une paroi 28 résistant à la pression de fonctionnement de l'installation et d'une paroi 28' isolant thermiquement tous les conduits volumes et chambres décrits ci-après vis-à-vis de l'extérieur.

Le charbon pulvérulent et le gaz de réaction recyclé sont injectés respectivement par des conduits 40 et 41 dans une chambre de mélange 42 disposée coaxialement à l'intérieur de l'enveloppe 28, 28'. Cette chambre de mélange est en l'occurrence un lit fluidisé dont le niveau maximum 43 définit une hauteur de chambre supérieure au diamètre le plus grand de la chambre de mélange 42 limitée par des parois cylindriques 44 et 45.

Pour faciliter la compréhension du dessin des parois pleines à effet calorifuge telles que la paroi 45 sont hachurées, tandis que des parois d'échange de chaleur tells que la paroi 44 possèdent une section transversale telle que montrée à la figure 6 et apparaissent en section longitudinale non hachurée telle que montrée à la figure 5. Le fluide constitué d'un mélange de gaz et de matière pulvérulente sortant de la chambre de mélange 42 est amenée par des conduits coaxiaux délimités par la paroi 45 et une paroi d'échange thermique 46, des parois d'échange thermiques 47, 48, 49 et une paroi pleine 50 vers une fente circulaire d'injection 51 dans le bas de la chambre de réaction 1 délimitée par la paroi 49.

Il existe plusieurs variantes possibles pour la paroi 49. Elle peut être dans son entièreté une paroi d'échange thermique ou au contraire une paroi pleine à effet calorifuge. Il est possible aussi de la concevoir en deux parties, la partie inférieure à effet calorifuge et la partie supérieure admettant l'échange thermique.

Si la paroi 49 est une paroi d'échange thermique, un excellent transfert de chaleur vers le mélange charbon-gaz injecté par la fente 51 a lieu, mais la température dans la chambre de réaction décroît rapidement au fur et à mesure que ce mélange monte dans cette chambre.

Si au contraire la paroi 49 est une paroi pleine à effet calorifuge, au moins dans la partie inférieure de la chambre de réaction, la températrure reste relativement constante dans cette partie.

La torche à plasma 16 chauffe des gaz recyclés, principalement de l'hydrogène et du méthane injectés par des conduits d'entrée 52,53, 54 et éjecte les gaz chauds vers le haut dans la chambre de réaction.

Grâce à l'injection de charbon pulvérulent par la fente 51, un lit fluidisé se forme dont le niveau supérieur 55 est ajustable par le réglage du débit de gaz injecté dans la torche à plasma 36. Dans ce lit fluidisé a lieu l'hydrogénopyrolyse.

L'alimentation en gaz de la torche à plasma s'effectue à partir de l'extérieur de l'enceinte 28, 28' à travers une conduite 56 et ensuite à travers des conduites annulaires définies par les parois 48 et 50 séparées par une paroi 57, à effet calorifuge.

Le coke et les produits gazeux résultant de l'hydrogénopyrolyse du charbon quittent la chambre de réaction 1 en longeant une paroi tronconique 58 et par des conduites annulaires définies par les parois 46 et 47 séparées par une paroi 59. Le mélange coke et produits gazeux arrive ainsi dans un dispositif de séparation dont une première chambre est une chambre de décantation 60 dans laquelle une brusque augmentation de la section provoque la décantation du coke pulvérulent qui tombe dans un collecteur 61. Plusieurs conduits 62 permetttent ensuite d'extraire ce coke soit en continu, soit en discontinu. Le mélange appauvri en coke passe ensuite à travers un étranglement annulaire 63 pour être envoyé à travers des aubages 64. Ces aubages 64 impriment au mélange un mouvement circulaire qui permet de séparer des gaz le reste du coke qui peut être extrait par une ou plusieurs conduites 65.

Le gaz résiduel descend ensuite dans un conduit 66 annulaire délimité par une paroi mince 67 adossé à la paroi 28, 28' de l'enceinte. Grâce à la paroi d'échange thermique 44, le gaz y est refroidi progressivement en chauffant le charbon pulvérulent qui monte dans la chambre de mélange 42. Comme diverses fractions de gaz se condensent à des températures différentes, des sorties différentes sont prévues pour certaines fractions choisies. Une sortie 68 permet d'extraire des huiles lourdes, une sortie 69 permet d'extraire des hydrocarbures, type BTX (benzène, toluène, xylène). Enfin une sortie 70 permet l'extraction de la vapeur d'eau condensée. Chacune des sorties 68, 69 et 70 est munie d'une chicane 71 permettant de récolter les liquides à évacuer. Enfin, un conduit 72 est prévu pour l'extraction des hydrocarbures à très basse température de condensation tel que le méthane et l'hydrogène vers la vanne de répartition 32 et le compresseur 11 (fig.4) avant le recyclage partiel ou total du gaz réinjecté à travers les conduits 41 et 56.

La figure 8 est relative à un exemple d'une forme d'exécution dans laquelle une torche à plasma 74 est placée dans l'alignement d'une chambre de réaction 75 au dessus de cette dernière. Ainsi il ne se forme plus un lit fluidisé dans la chambre de réaction, mais un lit entraîné dans lequel réagissent les gaz recyclés sortant de la torche à plasma 74 et le mélange charbon gaz injecté par une fente annulaire 76 entre la torche à plasma 74 et la chambre de réaction 75.

Les parties de l'installation décrites par rapport à l'exemple de la figure 7 reprises sans changement dans le présent exemple portent les mêmes références que sur la figure 7 et ne sont plus décrites ici.

Le gaz recyclé introduit par le conduit 56 est envoyé dans un espace de répartition inférieur 77 dans la paroi supérieure duquel sont fixés une rangée de plusieurs conduits 78 communiquant avec un conduit annulaire délimité par des parois 79 et 80 d'où ils entrent par l'ouverture 52 dans la torche à plasma 74.

Le mélange charbon-gaz de réaction provenant de la chambre de mélange 42 descend dans le conduit entre les parois 45 et 46 dans un espace de répartition 81 dans la paroi supérieure duquel sont fixés une rangée de plusieurs conduits 82 communiquant avec un conduit annulaire délimité par les parois 79 et 49 pour être amené à l'entrée de la fente 76.

Le fluide sortant de la chambre de réaction 75 traverse la grille formée par les conduits 78 et 82 et monte dans le conduit annulaire entre les parois 80 et 46 dans la chambre de décantation 60.

## REVENDICATIONS

1. Procédé dans lequel des matières pulvérulentes sont injectées dans une chambre de mélange (14) au moyen d'un dispositif d'alimentation et transportées dans une chambre de réaction (1) coopérant avec une torche à plasma (16) et dans lequel les produits de la réaction sont envoyés dans un dispositif de séparation (2) séparant les produits solides des produits gazeux et ensuite dans un ou plusieurs dispositifs (6 à 8) de condensation et/ou d'élimination de composants gazeux,
    caractérisé en ce qu'on maintient une pression élevée dans un espace composé de la torche à plasma (16), la chambre de réaction (1) et le dispositif de séparation (2).

2. Procédé suivant la revendication 1, caractérisé en ce que la pression est maintenue grâce à des bouchons en matière solide, pulvérulente dans un dispositif d'alimentatinn (25) et dans la sortie (3) pour matières pulvérulentes solides dans le dispositif de séparation (2).

3. Procédé suivant une des revendications 1 ou 2, caractérisée en ce qu'au moins une partie des composants gazeux produits forme un gaz de recycalge injecté à un ou plusieurs endroits du dit espace sous pression (1,2,16).

4. Procédé suivant une des revendications précédentes, caractérisé en ce que les produits quittant la chambre de réaction (1) sont refroidis au moyen d'une douche (27) en amont ou à l'entrée du dispositif de séparation (2).

5. Procédé suivant une des revendications précédentes, caractérisé en ce qu'on récupère la chaleur emmagasinée dans les composés traversant la chambre de réaction (1) par des échangeurs (20,21,23) refroidissant des parois de l'espace sous pression (1,2,16) pour préchauffer la matière solide pulvérulente et/ou le gaz de réaction en amont de la chambre de réaction (1).

6. Procédé suivant une des revendications précédentes, caractérisé en ce qu'un mélange de gaz de réaction et/ou de gaz de recyclage et de matière pulvérulente traverse la torche à plasma (16) qui forme chambre de réaction.

7. Procédé suivant une des revendications 1 à 5, caractérisé en ce que la torche à plasma (16) est traversée seulement par du gaz de recyclage et/ou le gaz de réaction et en ce que la réaction avec la matière à traiter a lieu dans une chambre de réaction (1) disposée à la sortie 39.21/1872.

de la torche à plasma (16).

8. Procédé suivant une des revendications précédentes, caractérisé en ce qu'il sert à l'hydrogénopyrolyse de matières à haute teneur en carbone et en ce que les hydrocarbures légers produits lors de l'hydrogénopyrolyse sont partiellement ou totalement recyclés pour être soumis à un craquage thermique afin de produire l'hydrogène nécessaire à injecter dans la chambre de réaction (1).

9. Procédé suivant une quelconque des revendications précédentes, caractérisé en ce qu'on injecte dans la chambre de la torche à plasma (16) où a lieu le craquage et/ou dans la chambre de préchauffage (18,15) des goudrons et/ou des résidus de distillation de pétrole et/ou des huiles usées.

10. Procédé suivant une quelconque des revendications 6 à 9 , caractérisée en ce que dans le dispositif d'alimentation (18,15) des matières pulvérulentes on introduit de l'eau et/ou des hydrocarbures liquides.

11. Installation pour réaliser le procédé suivant une quelconque des revendications précédentes, caractérisée en ce que des parois d'échange de chaleur (44, 46 à 50, 79, 80) séparent l'ensemble, chambre de réaction (1,75) et conduits du fluide quittant la chambre de réaction, de la chambre de mélange (42) et/ou des conduits d'amenée des composants introduits dans la chambre de réaction (1,75) et/ou la torche à plasma (16,74).

12. Installation suivant la revendication 11, caractérisé en ce que la chambre de réaction (1,75) est entourée sur tout son pourtour de conduits épousant sa paroi (49), d'autres conduits dont chacun épouse la paroi d'un conduit voisin intérieur, et/ou de la chambre de mélange épousant les parois des conduits voisins intérieurs, et/ou du dispositif de séparation épousant au moins en partie la paroi de la chambre de mélange disposée à l'intérieur.

13. Installation suivant l'une quelconque des revendications 11 ou 12, caractérisée en ce que au moins une partie de la paroi (49) de la chambre de réaction est une paroi d'échange de chaleur tandis que l'autre partie de la paroi (49) de la chambre de réaction est une paroi calorifuge.

14. Installation suivant l'une quelconque des revendications 11 à 13, caractérisée en ce que la chambre de réaction (1,75), le dispositif de séparation (60 à 72) et les conduits qui les relient possèdent une longueur sensiblement plus grande que leurs diamètres les plus grands et sont enfermés dans une enceinte (28,28') sensiblement plus longue que son diamètre le plus grand et composée d'une paroi (28) calorifuge doublée d'une paroi (28') de pression.

15. Installation suivant une quelconque des revendications 11 à 14, caractérisée en ce qu'une vanne de pression (32') maintient sous pression élevée les gaz à l'intérieur de l'enceinte et en ce qu'un dispositif compresseur (11) introduit l'énergie nécessaire à la circulation des gaz à travers les conduits à l'intérieur de l'enceinte (28).

16. Installation suivant une quelconque des revendications 11 à 15 caractérisée en ce que les chambre de réaction, conduits de gaz et de mélange de matières pulvérulentes et gaz, chambre de mélange et dispositif de séparation sont définis par un ensemble de parois cylindriques coaxiaux dont l'axe coïncide avec l'axe de l'enceinte cylindrique (28, 28') qui les renferme.

Fig. 1

0057029

1/6

Fig.2

3/6

0057029

Fig.3

4/6                0057029

Fig. 4

Fig. 5          Fig. 6

0057029

Fig.7

0057029

Fig.8

))) Office européen
des brevets

# RAPPORT DE RECHERCHE EUROPEENNE

EP 82 20 0037.8

| Catégorie | DOCUMENTS CONSIDERES COMME PERTINENTS | | CLASSEMENT DE LA DEMANDE (Int. Cl. 3) |
|---|---|---|---|
| | Citation du document avec indication, en cas de besoin, des parties pertinentes | Revendication concernée | |
| Y | FR - A - 1 560 417 (F. CRUSCO)<br>* page 3 *<br>-- | 1 | C 22 B 4/00<br>C 10 G 1/06 |
| Y | FR - A1 - 2 357 632 (WESTINGHOUSE ELEC-TRIC)<br>* pages 9, 10 *<br>-- | 1 | |
| A | FR - A1 - 2 320 977 (WESTINGHOUSE ELEC-TRIC)<br>-- | | **DOMAINES TECHNIQUES RECHERCHES (Int. Cl. 3)** |
| A | GB - A - 891 971 (W.C. SCHROEDER)<br>-- | | |
| A | US - A - 3 954 954 (R.D. DAVIS et al.)<br>-- | | B 01 J 19/08<br>C 10 G 1/06 |
| A | DE - A1 - 2 624 741 (CITIES SERVICE)<br>-- | | C 10 G 15/12<br>C 22 B 4/00 |
| A | DE - A1 - 2 910 287 (ROCKWELL INTERNA-TIONAL)<br>& FR - A - 2 419 969<br>---- | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X Le présent rapport de recherche a été établi pour toutes les revendications | | |
|---|---|---|
| Lieu de la recherche<br>Berlin | Date d'achevement de la recherche<br>22-04-1982 | Examinateur<br>SUTOR |

OEB Form 1503.1 06.78